# EUROPEAN PATENT SPECIFICATION

(11) **EP 3 496 468 B1**
(45) Date of publication and mention of the grant of the patent: **12.02.2020**
(21) Application number: 17206095.6
(22) Date of filing: 08.12.2017
(51) Int. Cl.: H04W 52/02

(54) **NETWORK ENTITY FOR CREATING A TRANSMISSION SESSION VIA A NETWORK SYSTEM, ROAMING FIREWALL, NETWORK SYSTEM, METHOD AND COMPUTER PROGRAM PRODUCT**
NETZWERKEINHEIT ZUR ERZEUGUNG EINER ÜBERTRAGUNGSSITZUNG ÜBER EIN NETZWERKSYSTEM, ROAMING-FIREWALL-NETZWERKSYSTEM, VERFAHREN UND COMPUTERPROGRAMMPRODUKT
ENTITÉ DE RÉSEAU POUR CRÉER UNE SESSION DE TRANSMISSION PAR L'INTERMÉDIAIRE D'UN SYSTÈME DE RÉSEAU, PARE-FEU D'ITINÉRANCE, SYSTÈME DE RÉSEAU, PROCÉDÉ ET PRODUIT-PROGRAMME D'ORDINATEUR

(43) Date of publication of application: 12.06.2019
(73) Proprietor: Deutsche Telekom AG, 53113 Bonn (DE)
(72) Inventor: SCHULZ, Mario, 04643 Geithain (DE)
(74) Representative: Braun-Dullaeus Pannen Emmerling Patent- & Rechtsanwaltspartnerschaft mbB

(56) References cited:
- EP-A1- 3 018 945
- US-A1- 2005 118 999
- US-A1- 2013 053 029
- US-B1- 8 676 159
- "3rd Generation Partnership Project; Technical Specification Group Services and System Aspects; Study on the security aspects of the next generation system (Release 14)", 3GPP DRAFT; S3-172095_TR_33899_130_CLEAR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 21 August 2017 (2017-08-21), XP051336126, Retrieved from the Internet: URL:http://www.3gpp.org/ftp/tsg_sa/WG3_Sec urity/TSGS3_88_Dali/Docs/ [retrieved on 2017-08-21]
- "3rd Generation Partnership Project; Technical Specification Group Core Network and Terminals; Access to the 3GPP Evolved Packet Core (EPC) via non-3GPP access networks; Stage 3 (Release 12)", 3GPP STANDARD; 24302-C70, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 19 December 2014 (2014-12-19), XP050916572, Retrieved from the Internet: URL:http://www.3gpp.org/ftp/Specs/zItuInfo /M.2012-2/2014-12/Rel-12/24_series/ [retrieved on 2014-12-19]
- "3rd Generation Partnership Project; Technical Specification Group Services and System Aspects; Architectural requirements (Release 14)", 3GPP STANDARD ; TECHNICAL SPECIFICATION ; 3GPP TS 23.221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.1.0, 16 December 2016 (2016-12-16), pages 1-52, XP051295440, [retrieved on 2016-12-16]

## Description

The present disclosure relates to a network entity for creating a transmission session for a user equipment device in a visited network wherein the transmission session is configured for transmitting data between the visited network and a home network. The present disclosure relates further to a roaming firewall for a network wherein the roaming firewall is configured to check data transmitted between a visited network and a home network. The present disclosure further relates to a network system, a method and a computer program product.

Customer devices, particularly machine-to-machine, M2M, or Internet of Things, loT, devices are designed for long working durations. Therefore, these customer devices use in particular power saving modes leading to an idle time of the user equipment device. Moreover, the user equipment devices transmit data to a customer, an application, a server, a data center, into the internet or the like. In particular GPRS tunneling protocol, GTP, sessions are used to transmit these data between a visited network, VPLMN, and a home network, HPLMN.

Data networks are in general designed for customer devices like smartphones which are configured to transmit and to receive data signals in short periods of time, for example every minute. Those devices have therefore a low idle time. The user equipment devices according to M2M and loT may have longer idle times according to the power saving mode, for example one week or a few days.

Document US 8 676 159 B1 relates to mobile networks and, more specifically, to communications among mobile networks.

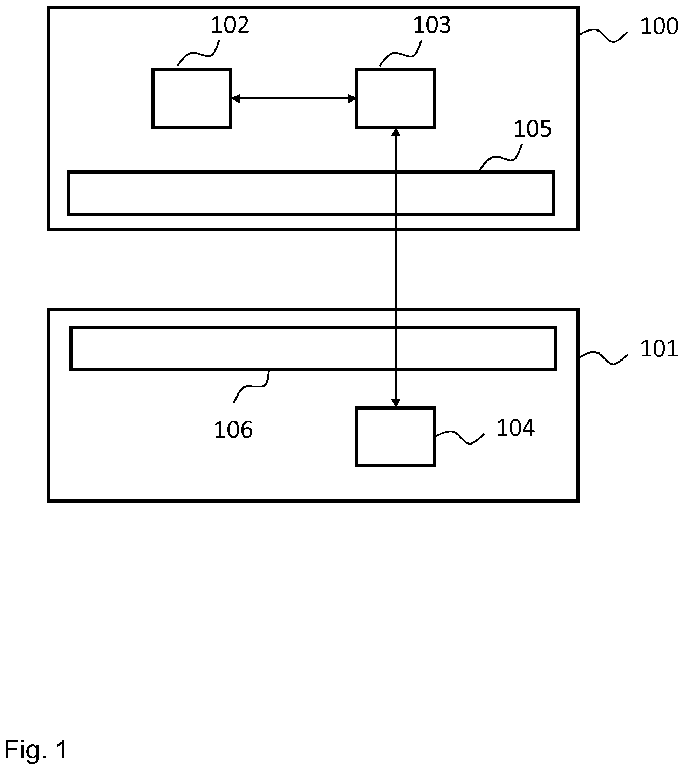

Fig. 1 shows an arrangement with a visited network 100 and a home network 101. The visited network 100 is a visited public land mobile network (VPLMN) and the home network 101 is a home public land mobile network (HPLMN). The user equipment device 102 is located in the visited network 100. The user equipment device 102 is an loT device and uses a power saving mode with a sleep phase of, for example, one week. In the visited network 100, there is also allocated a network entity 103 comprising at least the functionality of a mobile management entity (MME) and a serving gateway (SGW). In the home network 101 there is allocated a home network entity 104. The home network entity 104 comprises a PDN gateway (PGW). Both networks 100, 101 comprise a roaming firewall 105, 106. Each roaming firewall 105, 106 is configured to check incoming and outgoing transmissions in view of security leaks. According to standard procedures, these roaming firewalls 105, 106 analyze the GPT traffic, and within the respective firewall 105, 106, a firewall session is created. Once a successful packet data protocol (PDP) contact between the network entity 103 and the home network entity 104 is established, the roaming firewalls 105, 106 create this firewall sessions. In order to keep the firewall session table within the roaming firewall 105, 106 small, an idle timer for each GTP session is used. That means, if this idle timer of the GTP session within the roaming firewall 105, 106 expires, the session is deleted within the respective roaming firewall 105, 106. Currently, such idle timers are typically set to one hour or for example 24 hours. If this idle time expires, the user equipment device 102 will be detached from the home network 101. This means that the user equipment device 102 has to reattach to the home network 101 again, once the user equipment is waking up or power saving time is expired. This may be determined by periodic Tracking Area Update timer. Such a reattachment to the home network 101 consumes a lot of power.

It is therefore an objective of the invention to provide an improved concept for a connection between a visited network and a home network.

This object is achieved by the features of the independent claims. Further embodiments are described in the dependent claims, in the description as well as in the figures.

According to a first aspect of the invention, the objective is solved by a network entity for creating a transmission session for a user equipment device in a visited network. The user equipment device comprises an inactivity phase in which no transmission is sent. The transmission session is configured for transmitting data between the visited network and the home network. The transmission between the visited network and the home network is observed by a roaming firewall that is configured to check data transmitted between the visited network and the home network. The roaming firewall is configured to create a firewall session for the user equipment device. The firewall session comprises an idle timer for quitting the firewall session after an idle time in which no transmission is sent via the transmission session. The network entity comprises an interface that is configured to receive a first control message, the control message comprising a timer duration value indicating a duration of the inactivity phase of the user equipment device. The network entity comprises a processor that is configured to create a second control message according to a data transmission protocol and to include the received timer duration value into the control message so that the roaming firewall is able to read the timer duration value. The interface is configured to transmit the second control message towards a home network entity of the home network via the roaming firewall.

The visited network may be a VPLMN, and the home network may be an HPLMN. The transmission session may be a GTP session. The visited network and/or the home network may be an LTE or a CAT-M or a NB-loT network. The roaming firewall may be allocated in the visited network and/or the home network. Checking the data transmitted between the visited network and the home network comprises checking the transmitted data for security leaks and/or malware and/or viruses.

The interface of the network entity may be configured to receive and/or to transmit data. The interface may be an interface for receiving and/or transmitting radio signals and/or wired signals.

The processor may be a CPU of a computer system. The processor may also be a microcontroller or a virtual computer system.

The firewall session may be a firewall session according to GPRS Tunneling Protocol (GTP) Version 1 or GTP Version 2. An idle time of the firewall session can be set to a reasonable value by reading the timer duration value of the second control message. Adapting the idle time of the firewall session automatically increases the time in which the user equipment device use the power saving mode without being detached from the firewall session.

The firewall session comprises an idle timer for quitting the firewall session after an idle time in which no transmission is sent via the transmission session. Additionally or alternatively, the firewall session may comprise an idle timer for quitting the firewall session after an idle time in which no transmission is sent via the firewall session. The firewall session may be related to the transmissions session, so that a transmission in the transmission session may be handled by the firewall as if the transmission was in the firewall session.
The home network entity is aware of the power saving mode of the user equipment device and the TAU timer. The operator of the home network is able to determine SIM attach status information within roaming, especially a next possible time to contact the user equipment device and if the UE has sent the TAU successfully. The transmission protocol enrichment, in particular GTP enrichment, as described above also enables a more efficient session handling in the firewall.

In an embodiment, the network entity is a serving gateway, SGW, and the home network entity is a PDN gateway. These network entities are configured to transmit and receive data.

In an embodiment, the second control message comprises a create session request according to the data transmission protocol. The create session request may be a GTP or a GTP-C create session request. The create session request may be transmitted from the network entity to the home network entity. The roaming firewalls may check this second control message.

In an embodiment, the processor is configured to include the timer duration value into a predetermined value field according to the data transmission protocol.

The data transmission protocol may comprise a data field that is predetermined for a timer duration value. The data transmission protocol may be based on GTP, GTP-C, in particular the data transmission protocol is a new standard based on GTP.

In an embodiment, the first control message is a create session request message and the processor is configured to read the timer duration value out of the create session request message. The first control message may be transmitted by an MME. The SGW processes this first control message and forwards a GTP create session request towards the PGW in the home network.

According to a second aspect of the invention, the objective is solved by a roaming firewall for a network, wherein the roaming firewall is configured to check data transmitted between a visited network and a home network. The roaming firewall is configured to create a firewall session for a user equipment device, the firewall session comprising an idle time for quitting the firewall session after an idle time in which no transmission is sent via the firewall session. The roaming firewall is configured to read a timer duration value out of a control message transmitted from a network entity in the visited network towards a home network entity in the home network during the check of the control message. The roaming firewall is configured to determine an idle timer duration based on the read timer duration value and to set the idle timer to the determined idle timer duration.

The roaming firewall checks data transmitted from the VPLMN to the HPLMN and/or data transmitted from the HPLMN to the VPLMN. The roaming firewall checks this data for malware, viruses and other disturbing contents. During this check, the roaming firewall may check a timer duration value in a predetermined field for a timer duration value. The idle timer is configured to quit the firewall session after an idle time in which no transmission is sent via the firewall session. Quitting the firewall session comprises a session delete command and triggers signaling procedure towards the home network entity and/or the network entity.

In an embodiment, the roaming firewall is allocated in the visited network and/or the home network. Both networks desire a safe transmission of data and to secure devices in the respective network.

According to a third aspect of the invention, the objective is solved by a network system. The network system comprises a user equipment device configured to transmit data in predetermined time intervals according to a timer duration value. The system comprises a network entity for creating a transmission session for the user equipment device in a visited network. The transmission session is configured for transmitting data between the visited network and a home network. The transmission between the visited network and the home network is observed by a roaming firewall that is configured to check data transmitted between the visited network and the home network. The roaming firewall is configured to create a firewall session for the user equipment device, the firewall session comprising an idle timer for quitting the firewall session after an idle time in which no transmission is sent via the firewall session. The network entity comprises an interface that is configured to receive a first control message. The control message comprises the timer duration value of the user equipment device. The network entity comprises a processor that is configured to create a second control message according to a data transmission protocol and to include the received timer duration value into the control message so that the roaming firewall is able to read the timer duration value. The network entity is configured to transmit the control message towards a home network entity of the home network via the roaming firewall.

The user equipment device may be an loT device or an M2M device. The user equipment device is configured to use a power saving mode in a sleep phase. The sleep phase lasts longer than a sleep phase of other devices in a telecommunication network like a mobile phone, for example the sleep phase is about one week long. A network entity may be a network entity like described above. The roaming firewall can automatically set its idle timer to a value that corresponds with the sleep phase of the user equipment device.

In an embodiment, the system further comprises a controlling network entity and the user equipment device is configured to transmit the timer duration value to the controlling network entity. The controlling network entity is configured to create the first control message and to include the timer duration value into the first control message. The controlling network entity is configured to transmit the first control message towards the interface of the network entity. The controlling network entity may be an MME.

In an embodiment, the network system further comprises a home network entity that is configured to receive the second control message. The home network entity is configured to provide downlink data for the user equipment device, and to transmit the provided downlink data to the user equipment device via the network entity. The home network entity is configured to read the timer duration value from the second control message and to transmit the downlink data in intervals related to the timer duration value or to transmit the downlink data in response to a received data signal from the network entity comprising user data from the user equipment device.

The home network entity is allocated in the HPLMN. The home network entity may be a PGW. The PGW may be configured to transmit downlink data for the user equipment device via the transmission session to the network entity and the VPLMN. During a sleep phase of the user equipment device, the network entity cannot send the downlink data to the user equipment device. Therefore, the network entity would have to buffer the downlink data. Because the network entity is allocated in a visited network, it may be advantageous to buffer the downlink data in the home network. Therefore, the downlink data may be buffered in the home network entity. The home network entity may send this buffered downlink data towards the user equipment device, when the user equipment device is not in an idle state. This may be indicated by the timer duration value.

In an embodiment, the user equipment device is configured to perform a power saving mode and to wake up from the power saving mode in predetermined time intervals for transmitting data, wherein the timer duration value is related to the time intervals.

The user equipment device may save energy by using a power saving mode.

In an embodiment, the home network entity is configured to buffer the downlink data for the time interval. Buffering the downlink data by the home network device saves costs for using a separate storage provider and shifts the control of Data Delivery towards the HPLMN.

In an embodiment, the home network entity is configured to transmit the buffered downlink data towards the network entity when the time interval indicates that the user equipment device is not in an idle state and wherein the network entity is configured to forward downlink data towards the user equipment device. This provides efficient downlink data transmissions.

According to a fourth aspect of the invention, the objective is solved by a method for configuring an idle time of a roaming firewall, the idle timer being configured to quit a firewall session. The method comprises:
receiving a first control message by an interface of a network entity, the control message comprising a timer duration value indicating a duration of an inactivity phase of a user equipment device comprising an inactivity phase in which no transmission is sent;
creating a second control message according to a data transmission protocol by a processor of the network entity;
including the received timer duration value into the control message so that the roaming firewall is able to read the timer duration value by the processor of the network entity;
transmitting the control message towards a home network entity of the home network via the roaming firewall by the interface of the network entity;
checking the control message by the roaming firewall and reading the timer duration value;
setting the idle timer of the roaming firewall to a value related to the timer duration value.

According to a fifth aspect of the invention, the objective is solved by a computer program product according to claim 15.

The inventive concept is now described by way of example with reference to the accompanying drawing, in which
- Fig. 1: shows an arrangement with two networks according to the state of the art;
- Fig. 2: shows a schematic diagram of a network entity according to an embodiment of the invention;
- Fig. 3: shows a schematic diagram of a user equipment device according to an embodiment of the invention;
- Fig. 4: shows a schematic diagram of a controlling network entity according to an embodiment of the invention;
- Fig. 5: shows a schematic diagram of an arrangement with two networks according to an embodiment of the invention;
- Fig. 6: shows a schematic flowchart diagram of a method according to an embodiment of the invention; and
- Fig. 7: shows a schematic flowchart diagram of another method according to an embodiment of the invention.

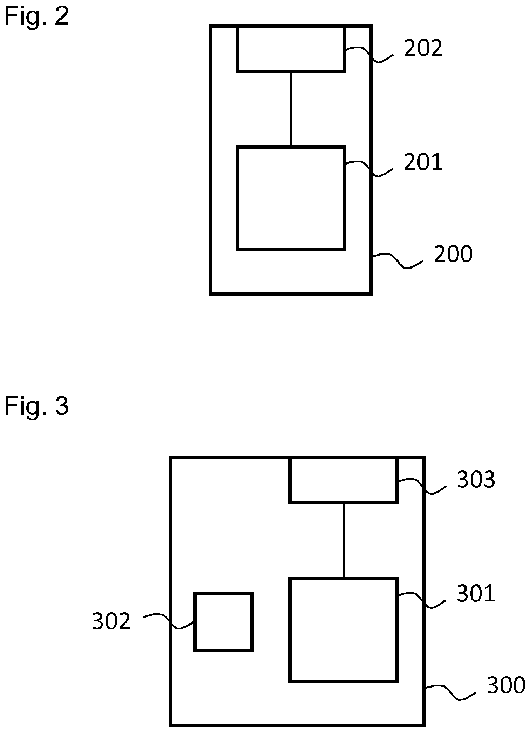

Fig. 2 shows a network entity 200. In the described embodiment, the network entity 200 is an SGW. In another embodiment, the network entity 200 may be another network entity for creating control messages and creating transmission sessions, in particular transmission sessions between a VPLMN and a HPLMN.

The network entity 200 comprises a processor 201. In the described embodiment, the processor 201 of the network entity 200 is a CPU of a server. In another embodiment, the processor 201 is another processing entity, in particular a virtual computer system or a microcontroller.

The network entity 200 comprises an interface 202. The interface 202 is configured to transmit and to receive signal messages. The interface comprises an input interface and an output interface. The interface 202 is in functional communication with the processor 201.

Fig. 3 shows a schematic diagram of a user equipment device 300. The user equipment device 300 is an loT device, for example a level sensor. In other embodiments the user equipment device is another M2M device. The user equipment device 300 comprises a processor 301. The processor 301 is a microcontroller. In another embodiment the processor 301 is a CPU or a processing chip. The processor 301 of the user equipment device 300 is configured to process data for the user equipment device 300, for example to process sensor data from a sensor (not shown) for a customer of the user equipment device 300.

The user equipment device 300 further comprises a timer 302. The timer 302 controls time intervals in which the processor 301 instructs an interface 303 of the user equipment device 300 to transmit the control data and/or a user equipment data towards a server of the customer. The timer is a timer for setting a tracking area update (TAU) event and/or for triggering the power saving mode of the user equipment device 300. The interface 303 is be a radio interface for transmitting radio signals. In another embodiment, the interface 303 is a wired interface for transmitting signals via cable. The interface 303 comprises an input interface for receiving transmissions and an output interface for transmitting transmissions. The timer 302 indicates the duration of the power saving mode, wake-up times and times in which the user equipment device 300 is online.

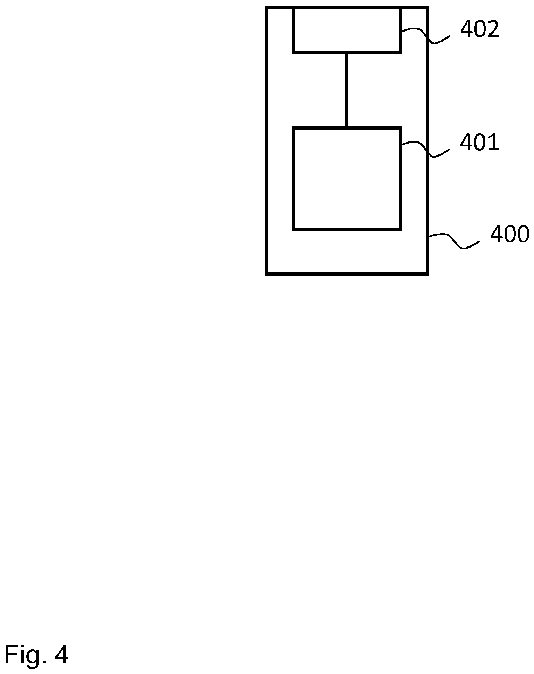

Fig. 4 shows a schematic diagram of a controlling network entity 400, in the described embodiment an MME. The controlling network entity 400 comprises a processor 401. The processor 401 is a CPU of a server system. In another embodiment, the processor 401 is a CPU of another computer system or a microcontroller or a virtual computer system.

The controlling network entity 400 comprises an interface 402. The interface 402 comprises an input interface and an output interface and is configured to receive and/or transmit data, in particular control data and/or user equipment data from the user equipment device 300 towards a server of a customer and vice versa.

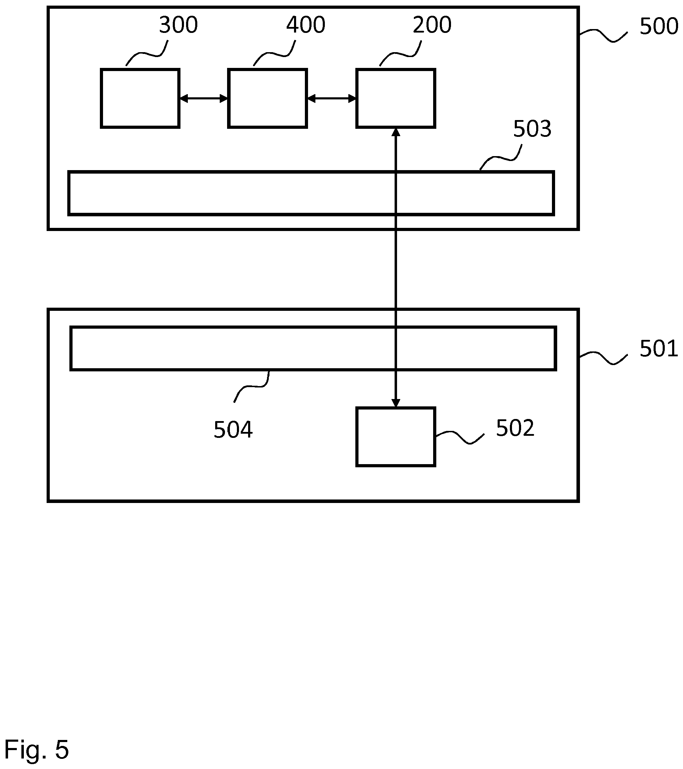

Fig. 5 shows an arrangement with a visited network 500 and a home network 501. In the home network 501, a home network entity 502 is allocated. In the described embodiment, the home network entity 502 is a PGW.

In the visited network 500, the network entity 200, the controlling network entity 400 and the user equipment device 300 are allocated.

The user equipment device 300 is configured to transmit data to the controlling network entity 400 and to receive data from the controlling network entity 400. The controlling entity 400 is configured to transmit and to receive data, in particular control data, to and from the network entity 200 and the user equipment device 300.

The network entity 200 is configured to create a transmission session between the visited network 500 and the home network 501 by transmitting control data according to a data transmission protocol, in particular GTP-C, to the home network entity 502. The network entity 200 is configured to receive data from the home network 501, in particular from the home network entity 502.

In the described embodiment, the visited network 500 comprises a roaming firewall 503. The home network 501 comprises a roaming firewall 504. In another embodiment, only one of the two networks 500 and 501 comprises a roaming firewall 503, 504.

The roaming firewalls 503, 504 are configured to check data transmitted from the visited network 500 to the home network 501 and in the other direction, respectively. In another embodiment, he roaming firewall 503 of the visited network 500 is configured to check data transmitted from the home network 501 towards the visited network 500 and the roaming firewall 504 of the home network 501 is configured to check and transmit data from the visited network 500 towards the home network 501.

The roaming firewall 503 of the visited network 500 creates a firewall session. The roaming firewall 504 of the home network 501 also creates a firewall session. Firewall sessions are related to an idle time in which no traffic occurs in the transmission session. The idle time is predetermined. For example, the idle time of the roaming firewall 503 is one hour and the idle time of the roaming firewall 504 is 24 hours. When the idle time expires, the respective roaming firewall quits its firewall session. In another embodiment, the firewall sessions are related to an idle time in which no traffic occurs in the firewall session. In yet another embodiment the firewall sessions are related to an idle time in which no traffic occurs in the firewall session and/or the transmission session.

The processor 301 of the user equipment device 300 is configured to include information, in particular timer information, of the timer 302 into a control message, in particular an attach request, towards the controlling network entity 400. The processor 401 of the controlling network entity 400 creates a first control message towards the network entity 200. This first control message comprises a create session request. In another embodiment, this first control message comprises data.

The first control message comprises timer information according to the power saving mode and the TAU timer. The first control message therefore comprises a timer duration value.

The network entity 200 is configured to read the timer duration value. Therefore, the processor reads the timer duration value out of a timer duration value field in the first control message. The processor 201 of the network entity 200 creates a second control message for establishing a transmission session between the visited network 500 and the home network 501, in particular between the network entity 200 and the home network entity 502. The processor 201 of the network entity 200 is configured to include the timer duration value into this second control message. The second control message corresponds to a data transmission protocol, in particular GTP-C or a protocol based on GTP-C comprising a timer duration value field. In the described embodiment, the network data transmission protocol is a GTP-C protocol. For including timer duration value into a control message according to the GTP-C protocol, a standardization within 3GPP may be performed, which allows international use of the described benefits.

The roaming firewalls 503, 504 check the second control message that is transmitted from the network entity 200 towards the home network entity 502. The roaming firewalls 503, 504 perform a security check on the second control message to detect possible malware or viruses. Moreover, the roaming firewalls 503, 504 also check if there is a timer duration value stored in the second control message. If the roaming firewalls 503, 504 detect such a timer duration value in the second control message, they read the timer duration value and set their own idle timer for quitting the firewall session that is assigned to the user equipment device 300 to the timer duration value. In another embodiment, the roaming firewalls 503, 504 set their idle timer to a value bigger than the timer duration value stored in the second control message. In another embodiment only one of the roaming firewalls 503, 504 checks the second control message that is transmitted from the network entity 200 towards the home network entity 502 and sets its idle timer as described above.

After setting the idle timer of the roaming firewall 503, 504 to this value, the firewall session lasts long enough to wait for the power saving mode sleep phase of the user equipment device 300.

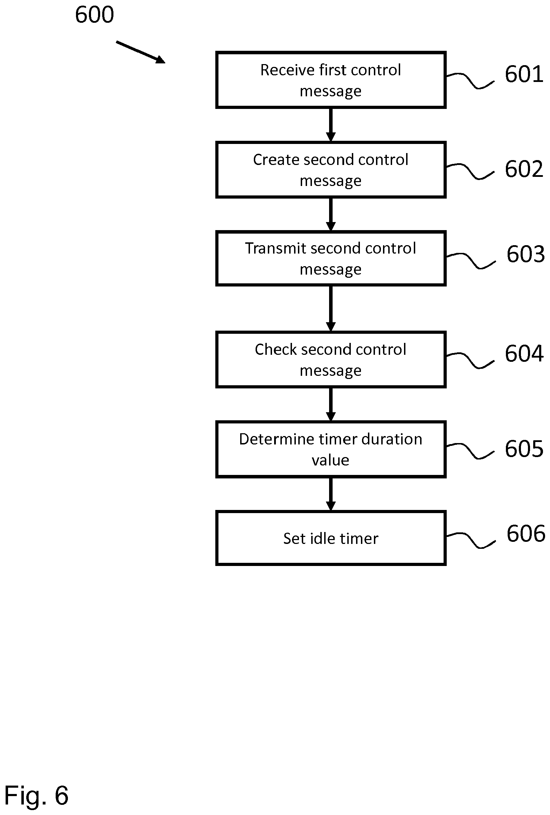

Fig. 6 shows a schematic flowchart diagram 600 of a method according to an embodiment of the invention. In step 601, the network entity 200 receives a first control message comprising a timer duration value indicating a transmitting interval of a user equipment device 300.

In step 602, the processor 201 of the network entity 200 creates a second control message. The processor 201 includes the timer duration value into the second control message. In step 603, the interface of the network entity 200 transmits the second control message towards the home network entity 502.

In step 604, the roaming firewall 504 and the roaming firewall 503 check the second control message for possible malware and viruses. In another embodiment only one of the two roaming firewalls 503, 504 checks the second control message.

In step 605, the roaming firewalls 503, 504 detect the timer duration value in the second control message. Therefore, the roaming firewalls 503, 504 read the timer duration value out of a timer duration value field in the second control message according to the transmission protocol.

In step 606, the roaming firewalls 503, 504 set their idle timer for quitting the firewall session that is related to the user equipment device 300 to a value related to the timer duration value of the second control message.

The user equipment device 300 is further configured to send tracking area update requests towards the controlling network entity 400. In this tracking area update request that may be another control message, the user equipment device 300 may set a new value for the power saving mode timer and/or the tracking area update timer. The controlling network entity 400 is configured to forward this updated timer duration values towards the network entity 200.

The idle timers of the roaming firewalls 503, 504 are set to the former transmitted timer duration values. Therefore, the roaming firewalls 503, 504 accept the transmission between the user equipment device 300 and the home network entity 502. Therefore, the roaming firewalls 503, 504 do not always check the transmission during this transmission session after acknowledging the identity of the transmission partners.

The network entity 200 detects in the control message from the controlling network entity 400 the updated timer duration value. The network entity 200 then creates a new control message towards the home network entity 200 that has an indication for the roaming firewalls 503, 504 to check the further control message from the network entity 200 to the home network entity 502 for an updated timer duration value in the new control message to update their own idle timer.

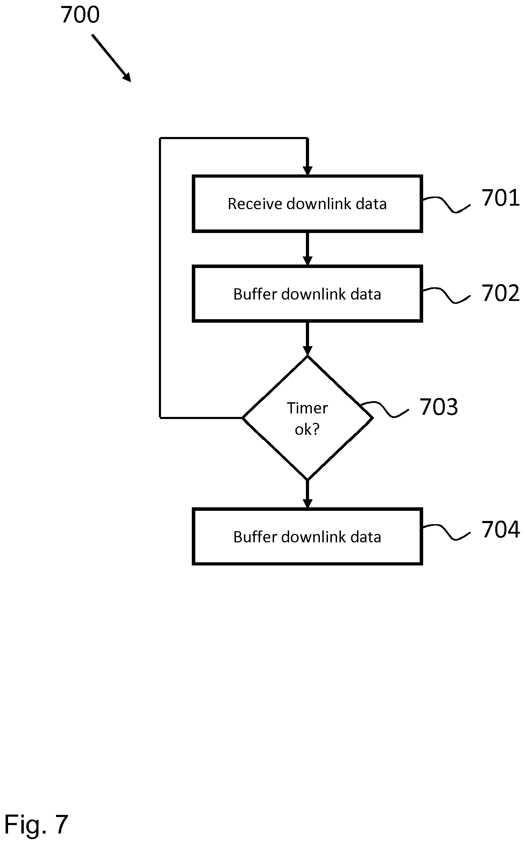

Fig. 7 shows a schematic flowchart diagram 700 of a method according to an additional embodiment of the invention. In step 701, the home network entity 502 receives downlink data for the user equipment device 300. The home network entity 502 has received a second control message comprising the time and duration value. Therefore, the home network entity 502 knows the sleeping phases of the user equipment device 300 and when the user equipment device 300 is ready to transmit and/or receive data.

The home network entity 502 stores the downlink data in step 702 in a memory (not shown in the figures) allocated to the home network entity 502. Therefore, the downlink data is buffered.

In step 703, the home network entity determines if the user equipment device 300 is ready to receive downlink data. The home network entity 502 checks its own timer and compares the timer with the timer duration value of the user equipment device 300.

If in step 703 the home network entity 502 does not detect that the user equipment device 300 is ready to receive data, it waits, and in case of incoming of new download data, the steps 701, 702 are repeated.

If the home network entity 502 detects in step 703 that the user equipment device 300 is ready to receive downlink data, the home network entity 502 collects the buffered downlink data for the user equipment device 300 and transmits this buffered downlink data in a data transmission message towards the user equipment device 300.

### List of reference signs

- 100, 500: visited network
- 101, 501: home network
- 102, 300: user equipment device
- 103,200: network entity
- 104, 502: home network entity
- 400: controlling network entity
- 105, 106, 503, 504: roaming firewall
- 201,301,401: processor
- 202, 303, 402: interface
- 302: timer
- 600, 700: flowchart diagram
- 601 to 606: step
- 701 to 704: step

## Claims

1. Network entity (200) for creating a transmission session for a user equipment device (300) in a visited network (500), wherein the transmission session is configured for transmitting data between the visited network (500) and a home network (501),
wherein the user equipment device (300) comprises an inactivity phase in which no transmission is sent;
wherein the transmission between the visited network (500) and the home network (501) is observed by a roaming firewall (503, 504) that is configured to check data transmitted between the visited network (500) and the home network (501) and
wherein the roaming firewall (503, 504) is configured to create a firewall session for the user equipment device (300), the firewall session comprising an idle timer for quitting the firewall session after an idle time in which no transmission is sent via the transmission session,
the network entity (200) comprising:
an interface (202) that is configured to receive a first control message, the control message comprising a timer duration value indicating a duration of the inactivity phase of the user equipment device (300);
a processor (201) that is configured to create a second control message according to a data transmission protocol and to include the received timer duration value into the control message so that the roaming firewall (503, 504) is able to read the timer duration value;
wherein the interface (202) is configured to transmit the second control message towards a home network entity (502) of the home network (501) via the roaming firewall (503, 504).

2. The network entity (200) according to claim 1, wherein the network entity (200) is a serving gateway and wherein the home network entity (502) is a PDN gateway.

3. The network entity (200) according to one of the previous claims, wherein the second control message comprises a create session request according to the data transmission protocol.

4. The network entity (200) according to one of the previous claims, wherein the processor (201) is configured to include the timer duration value into a predetermined value field according to the data transmission protocol.

5. The network entity (200) according to one of the previous claims, wherein the first control message is a create session request message and wherein the processor (201) is configured to read the timer duration value out of the create session request message.

6. A roaming firewall (503, 504) for a network (500, 501), wherein the roaming firewall is configured to check data transmitted between a visited network (500) and a home network (501) and
wherein the roaming firewall (503, 504) is configured to create a firewall session for a user equipment device (300), the firewall session comprising an idle timer for quitting the firewall session after an idle time in which no transmission is sent via the firewall session, and
wherein the roaming firewall (503, 504) is configured to read a timer duration value out of a control message transmitted from a network entity (200) in the visited network (500) towards a home network entity (502) in the home network (501) during the check of the control message, and
wherein the roaming firewall (503, 504) is configured to determine an idle timer duration based on the read timer duration value and to set the idle timer to the determined idle timer duration.

7. The roaming firewall (503, 504) according to claim 6, wherein the roaming firewall (503, 504) is allocated in the visited network (500) and/or the home network (501).

8. A network system comprising
a user equipment device (300) configured to transmit data in predetermined time intervals according to a timer duration value;
a network entity (200) for creating a transmission session for the user equipment device (300) in a visited network (500), wherein the transmission session is configured for transmitting data between the visited network (500) and a home network (501),
wherein the transmission between the visited network (500) and the home network (501) is observed by a roaming firewall (503, 504) that is configured to check data transmitted between the visited network (500) and the home network (501) and
wherein the roaming firewall (503, 504) is configured to create a firewall session for the user equipment device (300), the firewall session comprising an idle timer for quitting the firewall session after an idle time in which no transmission is sent via the firewall session,
the network entity (200) comprising:
an interface (202) that is configured to receive a first control message, the control message comprising the timer duration value of the user equipment device (300);
a processor (201) that is configured to create a second control message according to a data transmission protocol an to include the received timer duration value into the control message so that the roaming firewall (503, 504) is able to read the timer duration value;
wherein the network entity (200) is configured to transmit the control message towards a home network entity (502) of the home network (501) via the roaming firewall (503, 504).

9. The network system according to claim 8, wherein the system further comprises a controlling network entity (400) and
wherein the user equipment device (300) is configured to transmit the timer duration value to the controlling network entity (400) and
wherein the controlling network entity (400) is configured to create the first control message, to include the timer duration value into the first control message and to transmit the first control message towards the interface (202) of the network entity (200).

10. The network system according to one of claims 8 or 9, further comprising a home network entity (502) that is configured to receive the second control message and
wherein the home network entity (502) is configured to provide downlink data for the user equipment device (300), and to transmit the provided downlink data to the user equipment device (300) via the network entity (200);
wherein the home network entity (502) is configured to read the timer duration value from the second control message and to transmit the downlink data in intervals related to the timer duration value or to transmit the downlink data in response to received uplink data from the user equipment device (300).

11. The network system according to one of claims 8 to 10, wherein the user equipment device (300) is configured to perform a power saving mode and to wake up from the power saving mode in predetermined time intervals for transmitting data, wherein the timer duration value is related to the time intervals.

12. The network system according to claim 11, wherein the home network entity (502) is configured to buffer the downlink data for the time interval.

13. The network system according to claim 12, wherein the home network entity (502) is configured to transmit the buffered downlink data towards the network entity (200) when the time interval indicates that the user equipment device (300) is not in an idle state and wherein the network entity (200) is configured to forward the downlink data towards the user equipment device (300).

14. A method for configuring an idle timer of a roaming firewall (503, 504), the idle timer being configured to quit a firewall session, the method comprising:
receiving a first control message by an interface (202) of a network entity (200), the control message comprising a timer duration value indicating a duration of an inactivity phase of a user equipment device (300) comprising an inactivity phase in which no transmission is sent;
creating a second control message according to a data transmission protocol by a processor (201) of the network entity (200);
including the received timer duration value into the control message so that the roaming firewall (503, 504) is able to read the timer duration value by the processor (201) of the network entity (200);
transmitting the control message towards a home network entity (502) of the home network (501) via the roaming firewall (503, 504) by the interface (202) of the network entity (200);
checking the control message by the roaming firewall (503, 504) and reading the timer duration value;
setting the idle timer of the roaming firewall (503, 504) to a value related to the timer duration value.

15. Computer program product with program code to execute the method according to claim 14, when the program code is being executed on a computer system.

## Patentansprüche

1. Netzwerkeinheit (200) zur Erzeugung einer Übertragungssitzung für ein Benutzerausrüstungsgerät (300) in einem besuchten Netzwerk (500), wobei die Übertragungssitzung konfiguriert ist, Daten zwischen dem besuchten Netzwerk (500) und einem Heimnetzwerk (501) zu übertragen,
wobei das Benutzerausrüstungsgerät (300) eine Inaktivitätsphase umfasst, in der keine Übertragung gesendet wird;
wobei die Übertragung zwischen dem besuchten Netzwerk (500) und dem Heimnetzwerk (501) durch eine Roaming-Firewall (503, 504) überwacht wird, die konfiguriert ist, zwischen dem besuchten Netzwerk (500) und dem Heimnetzwerk (501) übertragene Daten zu überprüfen, und
wobei die Roaming-Firewall (503, 504) konfiguriert ist, eine Firewall-Sitzung für das Benutzerausrüstungsgerät (300) zu erzeugen, wobei die Firewall-Sitzung einen Leerlaufzeitgeber zum Beenden der Firewall-Sitzung nach einer Leerlaufzeit, in der keine Übertragung über die Übertragungssitzung gesendet wird, umfasst,
die Netzwerkeinheit (200) umfassend:
eine Schnittstelle (202), die konfiguriert ist, eine erste Steuernachricht zu empfangen, wobei die Steuernachricht einen Zeitgeberdauerwert, der eine Dauer der Inaktivitätsphase des Benutzerausrüstungsgeräts (300) angibt, umfasst;
einen Prozessor (201), der konfiguriert ist, eine zweite Steuernachricht gemäß einem Datenübertragungsprotokoll zu erzeugen, und den empfangenen Zeitgeberdauerwert in die Steuernachricht aufzunehmen, so dass die Roaming-Firewall (503, 504) in der Lage ist, den Zeitgeberdauerwert zu lesen;
wobei die Schnittstelle (202) konfiguriert ist, die zweite Steuernachricht über die Roaming-Firewall (503, 504) an eine Heimnetzwerkeinheit (502) des Heimnetzwerks (501) zu übertragen.

2. Netzwerkeinheit (200) nach Anspruch 1, wobei die Netzwerkeinheit (200) ein bedienendes Gateway ist, und wobei die Heimnetzwerkeinheit (502) ein PDN-Gateway ist.

3. Netzwerkeinheit (200) nach einem der vorhergehenden Ansprüche, wobei zweite Steuernachricht eine Erzeugungssitzungsanforderung gemäß dem Datenübertragungsprotokoll umfasst.

4. Netzwerkeinheit (200) nach einem der vorhergehenden Ansprüche, wobei der Prozessor (201) konfiguriert ist, den Zeitgeberdauerwert gemäß dem Datenübertragungsprotokoll in ein vorbestimmtes Wertefeld aufzunehmen.

5. Netzwerkeinheit (200) nach einem der vorhergehenden Ansprüche, wobei die erste Steuernachricht eine Sitzungserzeugungs-Anforderungsnachricht für eine ist, und der Prozessor (201) konfiguriert ist, den Zeitgeberdauerwert aus der Sitzungserzeugungs-Anforderungsnachricht auszulesen.

6. Roaming-Firewall (503, 504) für ein Netzwerk (500, 501), wobei die Roaming-Firewall konfiguriert ist, Daten zu überprüfen, die zwischen einem besuchten Netzwerk (500) und einem Heimnetzwerk (501) übertragen werden,
wobei die Roaming-Firewall (503, 504) konfiguriert ist, eine Firewall-Sitzung für ein Benutzerausrüstungsgerät (300) zu erzeugen, wobei die Firewall-Sitzung einen Leerlaufzeitgeber zum Beenden der Firewall-Sitzung nach einer Leerlaufzeit, in der keine Übertragung über die Firewall-Sitzung gesendet wird, umfasst, und
wobei die Roaming-Firewall (503, 504) konfiguriert ist, einen Zeitgeberdauerwert aus einer Steuernachricht auszulesen, die von einer Netzwerkeinheit (200) in dem besuchten Netzwerk (500) an eine Heimnetzwerkeinheit (502) in dem Heimnetzwerk (501) übertragen wird, während der Überprüfung der Steuernachricht, und
wobei die Roaming-Firewall (503, 504) konfiguriert ist, eine Leerlaufzeitgeberdauer basierend auf dem gelesenen Zeitgeberdauerwert zu bestimmen, und den Leerlaufzeitgeber auf die bestimmte Leerlaufzeitgeberdauer einzustellen.

7. Roaming-Firewall (503, 504) nach Anspruch 6, wobei die Roaming-Firewall (503, 504) in dem besuchten Netzwerk (500) und/oder in dem Heimnetzwerk (501) zugeordnet ist.

8. Netzwerksystem, umfassend
ein Benutzerausrüstungsgerät (300), das konfiguriert ist, gemäß einem Zeitgeberdauerwert Daten in vorbestimmten Zeitintervallen zu übertragen;
eine Netzwerkeinheit (200) zum Erzeugen einer Übertragungssitzung für das Benutzerausrüstungsgerät (300) in einem besuchten Netzwerk (500), wobei die Übertragungssitzung konfiguriert ist, Daten zwischen dem besuchten Netzwerk (500) und einem Heimnetzwerk (501) zu übertragen,
wobei die Übertragung zwischen dem besuchten Netzwerk (500) und dem Heimnetzwerk (501) von einer Roaming-Firewall (503, 504) überwacht wird, die konfiguriert ist, zwischen dem besuchten Netzwerk (500) und dem Heimnetzwerk (501) übertragene Daten zu überprüfen, und
wobei die Roaming-Firewall (503, 504) konfiguriert ist, eine Firewall-Sitzung für das Benutzerausrüstungsgerät (300) zu erzeugen, wobei die Firewall-Sitzung einen Leerlaufzeitgeber zum Beenden der Firewall-Sitzung nach einer Leerlaufzeit, in der keine Übertragung über die Firewall-Sitzung gesendet wird, umfasst,
die Netzwerkeinheit (200) umfassend:
eine Schnittstelle (202), die konfiguriert ist, eine erste Steuernachricht zu empfangen, wobei die Steuernachricht den Zeitgeberdauerwert des Benutzerausrüstungsgeräts (300) umfasst;
einen Prozessor (201), der konfiguriert ist, eine zweite Steuernachricht gemäß einem Datenübertragungsprotokoll zu erzeugen, und den empfangenen Zeitgeberdauerwert in die Steuernachricht aufzunehmen, so dass die Roaming-Firewall (503, 504) in der Lage ist, den Zeitgeberdauerwert zu lesen;
wobei die Netzwerkeinheit (200) konfiguriert ist, die Steuernachricht über die Roaming-Firewall (503, 504) an eine Heimnetzwerkeinheit (502) des Heimnetzwerks (501) zu übertragen.

9. Netzwerksystem nach Anspruch 8, wobei das System ferner eine steuernde Netzwerkeinheit (400) umfasst, und
wobei das Benutzerausrüstungsgerät (300) konfiguriert ist, den Zeitgeberdauerwert an die steuernde Netzwerkeinheit (400) zu übertragen,
wobei die steuernde Netzwerkeinheit (400) konfiguriert ist, die erste Steuernachricht zu erzeugen, den Zeitgeberdauerwert in die erste Steuernachricht aufzunehmen, und die erste Steuernachricht an die Schnittstelle (202) der Netzwerkeinheit (200) zu übertragen.

10. Netzwerksystem nach einem der Ansprüche 8 oder 9, ferner umfassend eine Heimnetzwerkeinheit (502), die konfiguriert ist, die zweite Steuernachricht zu empfangen, und
wobei die Heimnetzwerkeinheit (502) konfiguriert ist, Abwärtsstrecken-Daten für das Benutzerausrüstungsgerät (300) bereitzustellen, und die bereitgestellten Abwärtsstrecken-Daten über die Netzwerkeinheit (200) an das Benutzerausrüstungsgerät (300) zu übertragen;
wobei die Heimnetzwerkeinheit (502) konfiguriert ist, den Zeitgeberdauerwert aus der zweiten Steuernachricht zu lesen, und die Abwärtsstrecken-Daten in Intervallen zu übertragen, die sich auf den Zeitgeberdauerwert beziehen, oder die Abwärtsstrecken-Daten als Antwort auf von dem Benutzerausrüstungsgerät (300) empfangene Aufwärtsstrecken-Daten zu übertragen.

11. Netzwerksystem nach einem der Ansprüche 8 bis 10, wobei das Benutzerausrüstungsgerät (300) konfiguriert ist, einen Energiesparmodus durchzuführen, und in vorbestimmten Zeitintervallen zum Übertragen von Daten aus dem Energiesparmodus aufzuwachen, wobei sich der Zeitgeberdauerwert auf die Zeitintervalle bezieht.

12. Netzwerksystem nach Anspruch 11, wobei die Heimnetzwerkeinheit (502) konfiguriert ist, die Abwärtsstrecken-Daten für das Zeitintervall zu puffern.

13. Netzwerksystem nach Anspruch 12, wobei die Heimnetzwerkeinheit (502) konfiguriert ist, die gepufferten Abwärtsstrecken-Daten an die Netzwerkeinheit (200) zu übertragen, wenn das Zeitintervall angibt, dass sich das Benutzerausrüstungsgerät (300) nicht in einem Leerlaufzustand befindet, und wobei die Netzwerkeinheit (200) konfiguriert ist, die Abwärtsstrecken-Daten an das Benutzerausrüstungsgerät (300) weiterzuleiten.

14. Verfahren zum Konfigurieren eines Leerlaufzeitgebers einer Roaming-Firewall (503, 504), wobei der Leerlaufzeitgeber konfiguriert ist, eine Firewall-Sitzung zu beenden, wobei das Verfahren umfasst:
Empfangen einer ersten Steuernachricht durch eine Schnittstelle (202) einer Netzwerkeinheit (200), wobei die Steuernachricht einen Zeitgeberdauerwert umfasst, der eine Dauer einer Inaktivitätsphase eines Benutzerausrüstungsgeräts (300) angibt, die eine Inaktivitätsphase, in der keine Übertragung gesendet wird, umfasst;
Erzeugen einer zweiten Steuernachricht gemäß einem Datenübertragungsprotokoll durch einen Prozessor (201) der Netzwerkeinheit (200);
Aufnehmen des empfangenen Zeitgeberdauerwerts in die Steuernachricht, so dass die Roaming-Firewall (503, 504) in der Lage ist, den Zeitgeberdauerwert durch den Prozessor (201) der Netzwerkeinheit (200) zu lesen;
Übertragen der Steuernachricht an eine Heimnetzwerkeinheit (502) des Heimnetzwerks (501) über die Roaming-Firewall (503, 504) durch die Schnittstelle (202) der Netzwerkeinheit (200);
Überprüfen der Steuernachricht durch die Roaming-Firewall (503, 504), und Lesen des Zeitgeberdauerwerts;
Einstellen des Leerlaufzeitgebers der Roaming-Firewall (503, 504) auf einen Wert, der sich auf den Zeitgeberdauerwert bezieht.

15. Computerprogrammprodukt mit Programmcode zur Ausführung des Verfahrens nach Anspruch 14, wenn der Programmcode auf einem Computersystem ausgeführt wird.

## Revendications

1. Entité de réseau (200) pour créer une session de transmission pour un dispositif d'équipement utilisateur (300) dans un réseau visité (500), dans laquelle la session de transmissions est configurée pour transmettre des données entre le réseau visité (500) et un réseau domestique (501),
dans laquelle le dispositif d'équipement d'utilisateur (300) comprend une phase d'inactivité dans laquelle aucune transmission n'est envoyée ;
dans laquelle la transmission entre le réseau visité (500) et le réseau domestique (501) est supervisée par un pare-feu itinérant (503, 504) qui est configuré pour vérifier des données transmises entre le réseau visité (500) et le réseau domestique (501) et
dans laquelle le pare-feu itinérant (503, 504) est configuré pour créer une session de pare-feu pour le dispositif d'équipement d'utilisateur (300), la session de pare-feu comprenant un temporisateur en veille pour quitter la session de pare-feu après un temps de veille pendant laquelle aucune transmission n'est envoyée via la session de transmission,
l'entité de réseau (200) comprenant :
une interface (202) qui est configurée pour recevoir un premier message de commande, le message de commande comprenant une valeur de durée de temporisateur indiquant une durée de la phase d'inactivité du dispositif d'équipement d'utilisateur (300);
un processeur (201) qui est configuré pour créer un second message de commande selon un protocole de transmission de données et inclure la valeur de durée de temporisateur reçue dans le message de commande de sorte que le pare-feu itinérant (503, 504) soit capable de lire la valeur de durée de temporisateur ;
dans laquelle l'interface (202) est configurée pour transmettre le second message de commandes vers une entité de réseau domestique (502) du réseau domestique (501) via le pare-feu itinérant (503, 504).

2. Entité de réseau (200) selon la revendication 1, dans laquelle l'entité de réseau (200) est une passerelle de desserte et dans laquelle l'entité de réseau domestique (502) est une passerelle PDN.

3. Entité de réseau (200) selon une des revendications précédentes, dans laquelle le second message de commande comprend une demande de création de session selon le protocole de transmission de données.

4. Entité de réseau (200) selon une des revendications précédentes, dans laquelle le processeur (201) est configuré pour inclure la valeur de durée de temporisateur dans un champ de valeur prédéterminé selon le protocole de transmission de données.

5. Entité de réseau (200) selon une des revendications précédentes, dans laquelle le message de commandes est un message de demande de création de session et dans laquelle le processeur (201) est configuré pour lire la valeur de durée de temporisateur dans le message de demande de création de session.

6. Pare-feu itinérant (503, 504) pour un réseau (500, 501), dans lequel le pare-feu itinérant est configuré pour vérifier les données transmises entre un réseau visité (500) et un réseau domestique (501) et
dans lequel le pare-feu itinérant (503, 504) est configuré pour créer une session de pare-feu pour un dispositif d'équipement d'utilisateur (300), la session de pare-feu comprenant un temporisateur en veille pour quitter la session de part après un temps de veille pendant lequel aucune transmission n'est envoyée via la session de pare-feu, et
dans lequel le pare-feu itinérant (503, 504) est configuré pour lire une valeur de durée de temporisateur dans un message de commande transmis depuis une entité de réseau (200) dans le réseau visité (500) vers une entité de réseau domestique (502) dans le réseau domestique (501) pendant la vérification du message de commande, et
dans lequel le pare-feu itinérant (503, 504) est configuré pour déterminer une durée de temporisateur en veille sur la base de la valeur de temporisateur lue et régler le temporisateur en veille sur la durée de temporisateur en veille déterminée.

7. Pare-feu itinérant (503, 504) selon la revendication 6, dans lequel le pare-feu itinérant (503, 504) est alloué dans le réseau visité (500) et/ou le réseau domestique (501) .

8. Système de réseau comprenant
un dispositif d'équipement d'utilisateur (300) configuré pour transmettre des donnés dans des intervalles de temps prédéterminé selon une valeur de durée de temporisateur ;
une entité de réseau (200) pour créer une session de transmissions pour le dispositif d'équipement d'utilisateur (300) dans un réseau visité (500), dans lequel la session de transmission est configurée pour transmettre des données entre le réseau visité (500) et un réseau domestique (501),
dans lequel la transmission entre le réseau visité (500) et le réseau domestique (501) est supervisée par un pare-feu itinérant (503, 504) qui est configuré pour vérifier les données transmises entre le réseau visité (500) et le réseau domestique (501) et
dans lequel le pare-feu itinérant (503, 504) est configuré pour créer une session de pare-feu pour le dispositif d'équipement d'utilisateur (300), la session de pare-feu comprenant un temporisateur en veille pour quitter la session de pare-feu après un temps de veille pendant laquelle aucune transmission n'est envoyée via la session de pare-feu,
l'entité de réseau (200) comprenant :
une interface (202) qui est configurée pour recevoir un premier message de commande, le message de commande comprenant une valeur de durée de temporisateur indiquant une durée de la phase d'inactivité du dispositif d'équipement d'utilisateur (300);
un processeur (201) qui est configuré pour créer un second message de commande selon un protocole de transmission de données et inclure la valeur de durée de temporisateur reçue dans le message de commande de sorte que le pare-feu itinérant (503, 504) soit capable de lire la valeur de durée de temporisateur ;
dans laquelle l'entité de réseau (200) est configurée pour transmettre le message de commande vers une entité de réseau domestique (502) du réseau domestique (501) via le pare-feu itinérant (503, 504).

9. Système de réseau selon la revendication 8, dans lequel le système comprend en outre une entité de réseau de commande (400) et
dans lequel le dispositif d'équipement d'utilisateur (300) est configuré pour transmettre la valeur de durée de temporisateur à l'entité de réseau de commande (400) et
dans lequel l'entité de réseau de commande (400) est configurée pour créer le premier message de commande, inclure la valeur de durée de temporisateur dans le premier message de commande et transmettre le premier message de commandes vers l'interface (202) de l'entité de réseau (200).

10. Système de réseau selon une quelconque des revendications 8 ou 9, comprenant en outre une entité de réseau domestique (502) qui est configurée pour recevoir le second message de commande et
dans lequel l'entité de réseau domestique (502) est configurée pour créer des données de liaison descendante pour le dispositif d'équipement d'utilisateur (300), et transmettre les données de liaison descendantes fournies au dispositif d'équipement d'utilisateur (300) via l'entité de réseau (200) ;
dans lequel l'entité de réseau domestique (502) est configurée pour lire la valeur de durée de temporisateur provenant du second message de commande et transmettre les données de liaison descendante dans des intervalles relatifs à la valeur de durée de temporisateur ou transmettre les données de liaison descendante en réponse aux données de liaison descendante reçues depuis le dispositif d'équipement d'utilisateur (300).

11. Système de réseau selon une des revendications 8 à 10, dans lequel le dispositif d'équipement d'utilisateur (300) est configuré pour exécuter un mode d'économie d'énergie et se réveiller du mode d'économie d'énergie à des intervalles de temps prédéterminés pour transmettre des données, dans lequel la valeur de durée de temporisateur est relative aux intervalles de temps.

12. Système de réseau selon la revendication 11, dans lequel l'entité de réseau domestique (502) est configurée pour mettre en mémoire tampon les données de liaison descendante pendant l'intervalle de temps.

13. Système de réseau selon la revendication 12, dans lequel l'entité de réseau domestique (502) est configurée pour transmettre les données de liaison descendante mises en mémoire tampon vers l'entité de réseau (200) lorsque l'intervalle de temps indique que le dispositif d'équipement d'utilisateur (300) n'est pas dans un état de veille et dans lequel l'entité de réseau (200) est configurée pour acheminer les données de liaison descendante vers le dispositif d'équipement d'utilisateur (300).

14. Procédé de configuration de la temporisateur en veille d'un pare-feu itinérant (503, 504), le temporisateur en veille étant configuré pour quitter une session de pare-feu, le procédé comprenant de :
recevoir un premier message de commande par une interface (202) d'une entité de réseau (200), le message de commandes comprenant une valeur de durée de temporisateur indiquant une durée d'une phase d'inactivité d'un dispositif d'équipement d'utilisateur (300) comprenant une phase d'inactivité dans laquelle aucune transmission n'est envoyée ;
créer un second message de commande selon un protocole de transmission de données par un processeur (201) de l'entité de réseau (200) ;
inclure la valeur de durée de temps de capteur reçue dans le message de commande de sorte que le pare-feu itinérant (503, 504) soit capable de lire la valeur de durée de commutateur par le processeur (201) de l'entité de réseau (200) ;
transmettre le message de commande vers une entité de réseau domestique (502) du réseau domestique (501) via le pare-feu itinérant (503, 504) par l'interface (202) de l'entité de réseau (200) ;
vérifier le message de commande par le pare-feu itinérant (503, 504) et lire la valeur de durée de temporisateur ;
régler le temporisateur en veille du parfait itinérant (503, 504) sur une valeur relative à la valeur de durée de temporisateur.

15. Produit de programme informatique avec du code de programme pour exécuter le procédé selon la revendication 14, lorsque le code de programme est en train d'être exécuté sur un système informatique.
